# EUROPÄISCHE PATENTSCHRIFT

(11) **EP 0 751 727 B1**
(45) Veröffentlichungstag und Bekanntmachung des Hinweises auf die Patenterteilung: **17.09.1997**
(21) Anmeldenummer: 95911185.7
(22) Anmeldetag: 22.03.1995
(51) Int. Cl.: A47C 5/12, A47C 3/12

(54) **ZWEISCHALIGE TRAGVORRICHTUNG FÜR SITZLEHNEN-BAUGRUPPE**
DOUBLE-SHELLED SUPPORT FOR A SEAT BACK UNIT
SUPPORT A DEUX COQUES POUR ENSEMBLE DOSSIER DE SIEGE

(30) Priorität: 30.03.1994 CH 960/94
(43) Veröffentlichungstag der Anmeldung: 08.01.1997
(73) Patentinhaber: Symalit AG, CH-5600 Lenzburg (CH)
(72) Erfinder: PFISTER, Hans, CH-5600 Lenzburg (CH)
(74) Vertreter: Blum, Rudolf Emil Ernst
(86) Internationale Anmeldenummer: CH9500064
(87) Internationale Veröffentlichungsnummer: WO9526663

(56) Entgegenhaltungen:
- EP-A- 0 386 395
- DE-C- 3 734 232

## Beschreibung

Die vorliegende Erfindung betrifft eine zweischalige Tragvorrichtung aus Kunststoff für eine Sitzlehnen-Baugruppe mit einem als Rückenstütze für eine auf dem dazugeordneten Sitz sitzenden Person bestimmten Innenschalenteil und einem als Versteifungsglied wirkenden Aussenschalenteil.

Sitzlehnen-Baugruppen weisen üblicherweise eine Tragvorrichtung auf, welche als Platte oder als Rahmen ausgebildet sein kann. Diese Platte, bzw. dieser Rahmen kann im Falle von einfacheren Konstruktionen, z.B. Gartenstühle, zur direkten Berührung des Rückens der sitzenden Person dienen, oder kann z.B. bei Polstersesseln oder Kraftfahrzeugsitzen mit einer Polsterung verbunden sein. Die Tragvorrichtung, welche, wie bekannt, aus Metall oder Kunststoff gefertigt sein kann, kann weiter auf der Rückseite eine Beschichtung aufweisen, welche lediglich ein Lack oder auch ein zierender Ueberzug, beispielsweise ein textiles Erzeugnis, ein Stück Teppich, Leder etc. sein kann. Für Sitzlehnen sind einschalige, verrippte Tragvorrichtungen bekannt geworden, welche wohl kostengünstig herzustellen sind, jedoch nicht immer die höher werden Anforderungen, welche an solche Baugruppen gestellt werden, erfüllen können. Weiter sind aus zwei Pressteilen aus glasmattenverstärktem thermoplastischem Kunststofflaminat gefertigte und nachträglich verschweisste Schalenteile als Tragvorrichtung bekannt geworden. Dabei sind die zwei Schalenteile entlang Randbereichen miteinander verschweisst, die entlang beiden Seiten der Sitzlehne und entlang dem oberen Rand derselben verlaufen. Währenddem eine Tragvorrichtung, welche aus zwei miteinander verschweissten Schalenteilen ausgebildet ist, ohne Schaden grosse Kräfte aufnehmen kann und bei Kraftfahrzeugen auch den hohen Anforderungen im Falle eines Unfalles gerecht werden kann, ist die Herstellung mittels einer Schweissung kostenaufwendig und zeitaufwendig.

Die EP-A-0 386 395 offenbart eine zweischalige Tragvorrichtung aus Kunststoff für eine Sitzeinrichtung mit einem als Rückenstütze für eine auf dem dazugeordneten Sitz sitzenden Person bestimmten Innenschalenteil und einem als Versteifungsglied wirkenden Aussenschalenteil, wobei der Aussenschalenteil mittels einer Schnappverbindung mit dem Innenschalenteil verbunden ist. Diese Schnappverbindung ist jedoch derart ausgebildet, dass sie sich im Falle eines einwirkenden Kraftstosses lösen kann und zudem erlaubt diese Schnappverbindung grundsätzlich eine gegenseitige Bewegung der miteinander verbundenen Teile, so dass nicht von einer festen Verbindung die Rede sein kann.

Ziel der Erfindung ist, die angeführten Nachteile zu beheben und eine zweischalige Tragvorrichtung zu zeigen, welche kostengünstig und zur Montage zeitsparend ausgebildet ist.

Die erfindungsgemässe zweischalige Tragvorrichtung ist durch die Merkmale des Anspruchs 1 gekennzeichnet. Vorteilhafte Ausbildungen ergeben sich aus den abhängigen Ansprüchen.

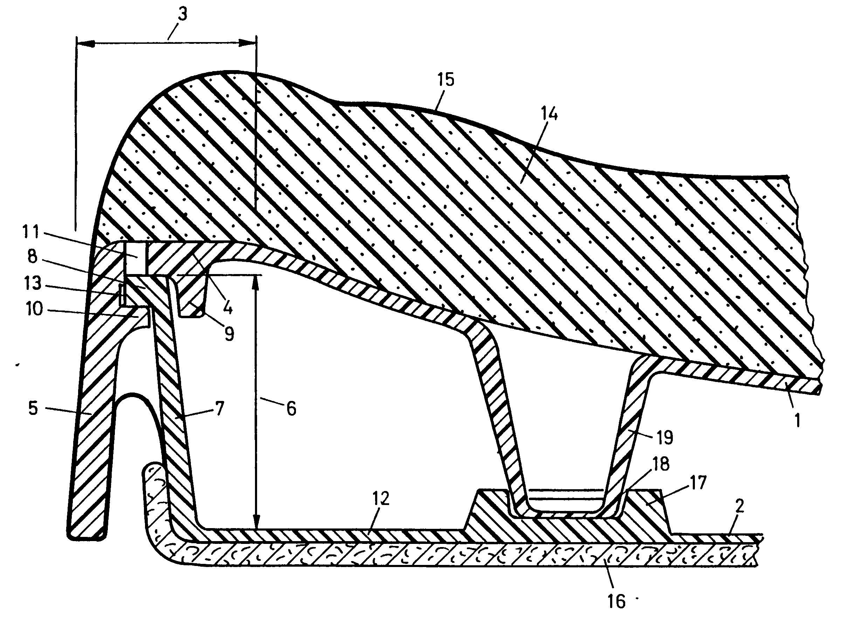

Nachfolgend wird der Erfindungsgegenstand anhand der Zeichnung beispielsweise näher erläutert.

Die einzige Figur zeigt einen horizontal verlaufenden Schnitt durch den linken Teil einer Sitzlehnen-Baugruppe.

Die in der Figur in einem horizontalen Schnitt dargestellte Sitzlehnen-Baugruppe weist einen Innenschalenteil 1 aus einem glasmattenverstärktem thermoplastischem Kunststofflaminat (GMT) auf. Mit diesem Innenschalenteil 1 ist bei dieser gezeigten Ausführung eine Polsterung 14 verbunden, welche beispielsweise ein Schaumstoff sein kann. Auf dieser Polsterung 14 ist ein äusserer Ueberzug 15 angeordnet. Dieser kann je nach Ausführung aus einem textilen Material, Kunstleder oder echtem Leder bestehen. Dieser Ueberzug 15 verläuft entlang dem Rückenstützbereich der Baugruppe und gemäss der Darstellung der Figur bis über die seitlichen Bereiche des Innenschalenteiles 1. Weiter ist ein Aussenschalenteil 2 vorhanden. Dieser weist ebenfalls einen Ueberzug 16 auf, der beispielsweise textiles Erzeugnis oder auch ein Stück Teppich sein kann, wie dies unter anderem bei Kombi-Personenkraftwagen bekannt ist. Dabei kann sich der Ueberzug 15 (siehe linker Endbereich der Figur) über den Innenschalenteil 1 hinweg bis zum Aussenschalenteil 2 erstrecken. Der Innenschalenteil 1 weist Aufnahmen 17 mit Ausnehmungen 18 auf. Entsprechend weist der Innenschalenteil 1 Vorsprünge 19 auf, mittels welchen er in den Aufnahmen 17 des Aussenschalenteiles eingesetzt ist.

Der Innenschalenteil 1 ist mit dem Aussenschalenteil 2 mittels einer formschlüssigen Schnappverbindung verbunden, wobei sich die Schnappverbindung entlang beiden Seiten der jeweiligen Sitzlehne und entlang dem oberen Teil und/oder auch entlang dem unteren derselben erstreckt.

Grundsätzlich ist nun zu sagen, dass die nachfolgend beschriebenen Bauteile als ununterbrochene Leisten ausgebildet sein können, die entlang der Randbereiche des Innenschalenteils 1 und Aussenschalenteils 2 verlaufen. Jedoch sind sie bevorzugt in Form von partiellen, jeweils in einem seitlichen Abstand voneinander angeordneten Leistengruppenabschnitte vorhanden, d.h. dass entlang eines Randbereiches eine grössere Anzahl, eine Mehrzahl von getrennten Schnappstellen bildende Leistenabschnitte angeordnet sind.

Zur Bildung einer jeweiligen Schnappverbindung weist der Innenschalenteil 1 einen bei seinem äusseren Randbereich angeordneten und entsprechend dem Verlauf der Schnappverbindung verlaufenden L-förmiger Abschnitt 3 auf. Dieser L-förmige Abschnitt 3 ist aus einem ersten Schenkelteil 4 und einem daran mindestens annähernd rechtwinklig anschliessenden zweiten Schenkelteil 5 gebildet. Der Aussenschalenteil 2 weist ebenfalls einen L-förmigen Abschnitt 6 auf, der aus einem dritten Schenkelteil 7 und einem davon abstehenden vierten Schenkelteil 8 gebildet ist. Dabei steht der dritte Schenkelteil 7 an sich vom plattenförmigen Hauptabschnitt 12 des Aussenschalenteiles 2 ab. Vom ersten Schenkelteil 4 des L-förmigen Abschnittes 3 steht ein erster Vorsprungabschnitt 9 an einer vom zweiten Schenkelteil 5 entfernten Stelle ab. Dieser Vorsprungabschnitt 9 verläuft mindestens annähernd parallel zum zweiten Schenkelteil 5.

Weiter steht vom zweiten Schenkelteil 5 ein zweiter Vorsprungabschnitt 10 ab, der seinerseits um eine Strecke vom ersten Schenkelteil 4 entfernt angeordnet ist. Es ist ersichtlich, dass diese zwei Vorsprungabschnitte 9 und 10 gegeneinander gerichtet sind und in einem Abstand voneinander enden, so dass sie eine L-förmige Lücke bestimmen. Der vierte Schenkelteil 8 und der unmittelbar daran anschliessende dritte Schenkelteil 7 des L-förmigen Abschnittes 6 des Aussenschalenteiles 2 sind in dieser L-förmigen Lücke angeordnet.

Beim Bereich dieser Lücke verlfiuft ein Schwächungsbereich 11, der analog zu den Leistenabschnitten durch eine Folge von Schlitzan gebildet sein kann, die entsprechend der Schnappverbindung z.B. bei beiden Seiten der Sitzlehne und entlang deren oberem Rand verläuft. Damit ist ersichtlich, dass der zweite Schenkelteil 5 relativ zum ersten Schenkelteil 4 elastisch ausgebogen werden kann.

Der dritte Schenkelteil 7 des L-förmigen Abschnittes 6 steht vom dünner ausgebildeten, plattenförmigen Hauptabschnitt 12 des Aussenschalenteiles 2 ab und es ist ersichtlich, dass auch der dritte Schenkelteil 7, d.h. der gesamte L-förmige Abschnitt 6 relativ zum plattenförmigen Hauptabschnitt 12 des Aussenschalenteiles 2 elastisch ausgebogen werden kann. Der senkrechte Abstand zwischen dem zweiten Vorsprungabschnitt 10 des zweiten Schenkelteiles 5 und dem diesem zugekehrten Oberflächenabschnitt des Innenschalenteiles 1 beim Bereich des Schwächungsbereiches 11 ist derart gewählt, dass dieser Abstand gleich der Dicke des dazwischen angeordneten vierten Schenkelteiles 8 des L-förmigen Abschnittes 6 ist.

Weiter ist der senkrechte Abstand zwischen dem ersten Vorsprungabschnitt 9 und dem zweiten Vorsprungabschnitt 10, welche Vorsprungabschnitte 9,10 gegeneinander weisen derart gewählt, dass er grösser als die Dicke des bei diesem Lückenbereich angeordneten Abschnittes des dritten Schenkelteiles 7 ist. Weiter ist ersichtlich, dass zwischen dem dem vierten Schenkelteil 8 zugekehrten Oberflächenabschnitt des ersten Vorsprungabschnittes 9 und dem beim Bereich der Schwächungsstelle 11 auf dem vierten Schenkelteil 8 aufliegenden Oberflächenabschnitt ein bogenförmig verlaufender Abschnitt beim ersten Schenkelteil 4 vorhanden ist.

Da sowohl der zweite Schenkelteil 5 als auch der dritte Schenkelteil 7 elastisch ausbiegbar sind ist ersichtlich, dass der dritte Schenkelteil 7 in der genannten Lücke eingeschnappt werden kann, so dass der Innenschalenteil 1 mit dem Aussenschalenteil 2 verbunden ist.

Aufgrund der oben dargelegten Abmessungen im Bereich der Lücke und insbesondere des vierten Schenkelteiles 8 ist ersichtlich, dass dieser vierte Schenkelteil 8 zwischen dem zweiten Vorsprungabschnitt 10 und dem auf dem Schenkelteil 8 aufliegenden Flächenbereich des ersten Schenkelteiles 4 geklemmt gehalten ist. Weiter liegt der entsprechende Bereich des zweiten Schenkelteiles 5 auf der Endfläche 13 des vierten Schenkelteiles 8 an. Somit ist eine formschlüssige Schnappversbindung zwischen dem Innenschalenteil 1 und dem Aussenschalenteil 2 gebildet.

Weiter ist ersichtlich, dass bei z.B. einem Unfall entstehenden auf den Bereich der Schnappverbindung einwirkenden Kräfte keine Trennung der zwei Schalenteile 1,2 bewirken können. Jegliche Kraft, unabhängig von ihrer Wirkungsrichtung, wird vom jeweiligen einen Schalenteil auf den anderen Schalenteil unmittelbar übertragen, womit ein Lösen der Schnappverbindung unmöglich ist.

## Patentansprüche

1. Zweischalige Tragvorrichtung aus Kunststoff für eine Sitzlehnen-Baugruppe mit einem als Rückenstütze für eine auf dem dazugeordneten Sitz sitzenden Person bestimmten Innenschalenteil (1) und einem als Versteifungsglied wirkenden Aussenschalenteil (2), welcher Aussenschalenteil mittels einer formschlüssigen Schnappverbindung mit dem Innenschalenteil klemmend verbunden ist, dadurch gekennzeichnet, dass der Innenschalenteil (1) beim Bereich der Schnappverbindung einen L-förmigen Abschnitt (3) mit einem ersten (4) und daran mindestens annähernd rechtwinklig anschliessenden zweiten Schenkelteil (5) aufweist, dass der Aussenschalenteil (2) einen plattenförmigen Hauptabschnitt (12) mit einem beim Bereich der Schnappverbindung weiteren L-förmigen Abschnitt (7) mit einem dritten (8) und daran mindestens annähernd rechtwinklig anschliessenden vierten Schenkelteil (9) aufweist, und dass der erste Schenkelteil (4) des Innenschalenteils (1) bei einer vom zweiten Schenkelteil (5) entfernten Stelle einen mindestens annähernd zum zweiten Schenkelteil (5) parallel verlaufenden Vorsprungabschnitt (9) und der zweite Schenkelteil (5) bei einer vom ersten Schenkelteil (5) entfernten Stelle einen mindestens annähernd zum ersten Schenkelteil (5) parallel verlaufenden zweiten Vorsprungabschnitt (10) aufweist, welche Vorsprungabschnitte (9;10) gegeneinander gerichtet sind und eine L-förmige Lücke bestimmend in einem Abstand voneinander enden, wobei der vierte Schenkelteil (8) und ein unmittelbar daran anschliessender Abschnitt des dritten Schenkelteiles (7) in der L-förmigen Lücke angeordnet sind.

2. Tragvorrichtung nach Anspruch 1, dadurch gekennzeichnet, dass der L-förmige Abschnitt (3) des Innenschalenteils (1) einen entlang dem Bereich der Lücke verlaufenden Schwächungsbereich (11) aufweist, so dass der zweite Schenkelteil (5) relativ zum ersten Schenkelteil (4) elastisch ausbiegbar ist, und dass der dritte Schenkelteil (7) langgestreckt ist und vom plattenförmigen Hauptabschnitt (12) des Aussenschalenteiles (2) absteht, so dass der dritte Schenkelteil (7) relativ zum plattenförmigen Hauptabschnitt (12) elastisch ausbiegbar ist.

3. Tragvorrichtung nach einem der vorangehenden Ansprüche, dadurch gekennzeichnet, dass der vierte Schenkelteil (8) eine festgelegte Dicke aufweist, die gleich dem senkrechten Abstand zwischen den ihm zugekehrten Oberflächenbereichen des zweiten Vorsprungabschnittes (10) und des L-förmigen Abschnittes (3) des Innenschalenteiles (1) beim Bereich des Schwächungsbereiches (11) desselben ist, und dass der dritte Schenkelteil (7) mindestens beim Bereich der Lücke zwischen dem ersten Vorsprungabschnltt (9) und dem zweiten Vorsprungabschnitt (10) eine festgelegte Dicke aufweist, die kleiner als der senkrechte Abstand zwischen dem ersten Vorsprungabschnitt (9) und dem zweiten Vorsprungabschnitt (10) ist.

4. Tragvorrichtung nach einem der vorangehenden Ansprüche, dadurch gekennzeichnet, dass der Innenschalenteil (1) zwischen dem dem vierten Schenkelteil (8) zugekehrten Oberflächenabschnitt und dem dem dritten Schenkelteil (7) zugekehrten Oberflächenabschnitt des ersten Vorsprungabschnittes (9) einen bogenförmig verlaufenden Oberflächenabschnitt zur Erleichterung des Einführens des vierten Schenkelteiles (8) in der Lücke aufweist.

5. Tragvorrichtung nach einem der vorangehenden Ansprüche, dadurch gekennzeichnet, dass der L-förmige Abschnitt (6) des Aussenschalenteils (2) und der zweite Schenkelteil (5) gegeneinander vorgespannt sind, wobei der zweite Schenkelteil (5) an der Endfläche (13) des vierten Schenkelteiles (8) anliegt.

6. Tragvorrichtung nach einem der vorangehenden Ansprüche, dadurch gekennzeichnet, dass der vierte Schenkelteil (8) zwischen den ihm zugekehrten Oberflächenbereichen des zweiten Vorsprungabschnittes (10) und des L-förmigen Abschnittes (3) des Innenschalenteils (1) geklemmt gehalten ist.

7. Tragvorrichtung nach einem der vorangehenden Ansprüche, dadurch gekennzeichnet, dass der Schwächungsbereich (11) durch eine Folge von parallel zum ersten Vorsprungabschnitt (9) beim Bereich der Lücke im ersten Schenkelteil (4) ausgebildeten langgestreckten Schlitzen gebildet ist.

8. Tragvorrichtung nach einem der vorangehenden Ansprüche, dadurch gekennzeichnet, dass der Innenschalenteil (1) und der Aussenschalenteeil (2) aus einem glasmattenverstärkten thermoplastischen Kunststofflaminat bestehen.

## Claims

1. Double-shelled support of a plastic material for a seat back structural unit with an inner shell part (1) intended as back rest for a person sitting on the seat belonging thereto, and with an outer shell part (2) acting as stiffening member, which outer shell part is coupled by means of a form-locked snap connection in a clamped manner to the inner shell part, characterised in that the inner shell part (1) comprises at the area of the snap connection a L-shaped section (3) with a first (4) and a thereto at least approximately perpendicularly adjoining second shank section (5) that the outer shell part (2) includes a plate-shaped main section (12) with a further L-shaped section (6) at the area of the snap connection with a third (7) and a thereto at least approximately perpendicularly adjoining fourth shank section (8), and that the first shank section (4) of the inner shell part (1) includes at a point remote from the second shank section (5) a projection (9) extending at least approximately parallel to the second shank section (5) and at a point remote from the first shank section (4) a second projection (10) extending at least approximately parallel to the first shank section (4), which projections (9, 10) are directed towards each other, end at a distance from each other and define a L-shaped gap, whereby the fourth shank section (8) and a thereat immediately adjoining section of the third shank section (7) are located in the L-shaped gap.

2. Support according to claim 1, characterised in that the L-shaped section (3) of the inner shell part (1) comprises a weakened area (11) extending along the area of the gap, such that the second shank section (5) is elastically bendable relative to the first shank section (4), and that the third shank section (7) is elongated and projects away from the plate shaped main section (12) of the outer shell part (2), such that the third shank section (7) is elastically bendable relative to the plate shaped main section (12).

3. Support according to one of the preceding claims, characterised in that the fourth shank section (8) features a predetermined thickness which equals the perpendicular distance between the surface areas of the second projection (10) facing same and the L-shaped section (3) of the inner shell part (1) at the area of the weakened area (11), and that the third shank section (7) features a predetermined thickness at least at the area of the gap between the first projection (9) and the second projection (10) which is smaller than the perpendicular distance between the first projection (9) and the second projection (10).

4. Support according to one of the preceding claims, characterised in the inner shell part (1) includes between the surface section of the first projection (9) facing the fourth shank portion (8) and the third shank portion (7) a curvilinear extending surface section for a facilitating of the inserting of the fourth shank portion (8) into the gap.

5. Support according to one of the preceding claims, characterised in that the L-shaped section (6) of the outer shell part (2) and the second shank portion (5) are pre-stressed towards each other, whereby the second shank section (5) abuts the end surface (13) of the fourth shank section (8).

6. Support according to one of the preceding claims, characterised in that the fourth shank section (8) is held in a clamped manner between the surface sections of the second projection (10) and of the L-shaped section (3) of the inner shell part (1) facing same.

7. Support according to one of the preceding claims characterised in that the weakened area (11) is formed by a succession of elongated slots formed parallel to the first projection (9) at the area of the gap in the first shank section (4).

8. Support according to one of the preceding claims, characterised in that the inner shell part (1) and the outer shell part (2) consist of a glass mat reinforced thermoplastic plastic laminates.

## Revendications

1. Ensemble porteur en matière plastique à deux coques pour un siège à dossier, avec une coque intérieure (1) pour un dossier destiné à une personne assise sur le siège correspondant, et avec une coque extérieure (2) servant de renfort et réunie par coinçage à la coque intérieure au moyen d'une liaison mécanique encliquetable, caractérisé en ce que la coque intérieure (1) comporte à proximité de la liaison encliquetable une section (3) en forme de L avec une première branche (4) et une seconde branche (5) jouxtant la première et au moins sensiblement orthogonale à celle-ci, en ce que la coque extérieure (2) comporte une partie principale formant une plaque (12) comprenant une autre section (6) en forme de L avec une troisième branche (7) et une quatrième branche (8) jouxtant la troisième et au moins sensiblement orthogonale à celle-ci, en ce que la première branche (4) de la coque intérieure (1) présente à un emplacement espacé de la seconde branche (5) une protubérance (9) au moins sensiblement parallèle à cette seconde branche (5) et que celle-ci présente à un emplacement espacé de la première branche (4) une seconde protubérance (10) au moins sensiblement parallèle à cette première branche, les protubérances (9; 10) étant orientées l'une vers l'autre sans se joindre et définissant entre elles un interstice en forme de L, la quatrième branche (8) et une partie de la troisième branche (7) située à sa proximité immédiate étant disposées dans l'interstice en forme de L.

2. Ensemble porteur selon la revendication 1, caractérisé en ce que la section en forme de L (3) de la coque intérieure (1) comporte un domaine affaibli (11) rendant la seconde branche (5) élastiquement déformable par rapport à la première (4), et en ce que la troisième branche (7) a une forme allongée et dépasse de la partie principale (12) de manière à être élastiquement déformable par rapport à celle-ci.

3. Ensemble porteur selon une des revendication précédentes, caractérisé en ce que la quatrième branche (8) possède une épaisseur déterminée égale à la distance orthogonale entre les surfaces lui faisant face de la seconde protubérance (10) et de la section en forme de L (3) de la coque intérieure (1) dans la région du domaine affaibli (11), et que la troisième branche (7) présente au moins au voisinage de l'interstice entre la première (9) et la seconde (10) protubérance une épaisseur déterminée inférieure à la distance orthogonale entre les protubérances (9, 10).

4. Ensemble porteur selon une des revendications précédentes, caractérisé en en ce que la coque intérieure (1) comporte une partie à surface courbe entre la partie de sa surface faisant face à la quatrième branche (8) et la partie de la surface de la première protubérance (9) faisant face à la troisième branche (7), afin de faciliter l'insertion de la quatrième branche dans l'interstice.

5. Ensemble porteur selon une des revendications précédentes caractérisé en ce que la section en forme de L (6) de la coque extérieure (2) et la seconde branche (5) sont mutuellement prétentionnées, cette seconde branche (5) reposant contre la surface terminale (13) de la quatrième branche (8).

6. Ensemble porteur selon une des revendications précédentes, caractérisé en ce que la quatrième branche (8) est maintenue coincée entre les portions de surfaces orientées vers elle de la seconde protubérance (10) et de la section en forme de L (3) de la coque intérieure (1).

7. Ensemble porteur selon une des revendications précédentes, caractérisé en ce que le domaine affaibli (11) est formé par une série de fentes allongées et parallèles à la première protubérance (9), pratiquées dans la première branche (4), au voisinage de l'interstice.

8. Ensemble porteur selon une des revendications précédentes, caractérisé en ce que la coque intérieure (1) et la coque extérieure (2) sont réalisées en un laminat thermoplastique renforcé par une couche en fibres de verre.
